# EUROPEAN PATENT SPECIFICATION

(11) **EP 0 472 409 B1**
(45) Date of publication and mention of the grant of the patent: **22.07.1998**
(21) Application number: 91307670.9
(22) Date of filing: 20.08.1991
(51) Int. Cl.: H02B 1/052, H02B 1/20

(54) **Improvements relating to the mounting of circuit breakers**
Verbesserung in Bezug auf die Befestigung von Schaltgeräten
Perfectionnements relatifs à la fixation des disjoncteurs électriques

(30) Priority: 21.08.1990 GB 9018346
(43) Date of publication of application: 26.02.1992
(60) Divisional application: 97104775.8
(73) Proprietor: CRABTREE ELECTRICAL INDUSTRIES LIMITED, West Midlands, WS1 2DN (GB)
(72) Inventor: Bowen, Peter William, Sutton Coldfield, West Midlands B75 6BP (GB); Shotter, Darren John, Cannock, Staffs WS12 5UY (GB)
(74) Representative: Lally, William

(56) References cited:
- DE-A- 1 946 714
- DE-A- 3 149 310
- FR-A- 2 281 049
- GB-A- 2 036 437
- GB-A- 2 198 886
- US-A- 4 642 733

## Description

This invention is concerned with improvements relating to an electricity supply assembly, and in particular to the mounting of circuit breakers on a conventional mounting rail.

A conventional circuit breaker, hereinafter referred to as being of the kind specified, comprises a generally flat, parallel-sided body provided on the underside thereof with a mounting recess which in use is positioned over and engaged with a mounting rail, with a primary plane of the circuit breaker, extending parallel to the flat sides, extending at right angles to the length of the mounting rail.

A conventionally used mounting rail is termed a "din-rail", being of inverted top hat cross-section, comprising parallel upwardly-facing flanges and narrow outwardly-turned lips.

Conventionally the circuit breaker is provided on the underside thereof with an inwardly-turned lip, providing a fixed retaining formation having a re-entrant surface, an opposite side edge portion of the recess being bounded by straight edge. The circuit breaker comprises a catch assembly, resiliently urged from a retracted position to an advanced position, in which advanced position a retaining element of the catch assembly projects through said straight edges a short distance into the recess.

In use, the circuit breaker is engaged with the mounting rail, the retaining formation being engaged beneath one of the lips with the underside of the circuit breaker inclined relative to the mounting rail, and the circuit breaker moved angularly so as to cause the retaining element to engage the other lip, the profile of the retaining element causing it to be momentarily depressed against the resilient force urging it to its advanced position, as it passes behind the other lip. The circuit breaker is then clamped in conventional manner to a bus-bar, supported in parallel relationship to the mounting rail, with a primary plane of the circuit breaker extending parallel to the flat side extending at right angles to the length of the mounting rail, with the flat faces of the circuit breaker lying against the flat faces of adjacent circuit breakers.

When it is required to move one circuit breaker from an array of circuit breakers on the rail, the retaining element is manually retracted, and held retracted, and the circuit breaker is tilted within said primary plane to permit rectilinear movement of the circuit breaker relative to the rail to disengage the fixed retaining formation from the rail. This necessitates a temporary removal of the bus-bar, and this is inconvenient since it involves disruption of the connections of other circuit breakers and/or of other electrical equipment used in relation to the bus-bar.

There is known from DE-A-1946714 an electricity supply assembly comprising a circuit breaker, a mounting rail on to which the circuit breaker is in use mounted, and a supply assembly for the supply of electricity to the circuit breaker, the mounting rail having a flat mounting surface and the circuit breaker comprising a mounting recess in the underside thereof which in use is positioned over and engaged with said mounting surface, the supply assembly comprising an elongated housing mounted adjacent to the mounting rail and an elongate supply member located in the housing, the housing being provided with an opening and the supply member having a contact surface extending in the longitudinal direction parallel to the length of the mounting rail, the circuit breaker comprising a contact member for electrical engagement with the supply member.

Difficulties are however encountered in arrangements such as that described above, when mounting the circuit breaker on the conventional mounting rail, and causing the contact member to enter into electrical engagement with the supply member.

Numerous suggestions have been made for the provision of a more convenient mounting of circuit breakers of the kind specified to the mounting rail, to enable them to be removed and replaced with minimal disruption. However heretofore all other suggestions have been unsatisfactory in one aspect or other, and/or unduly expensive.

Many disadvantages encountered in currently available electricity supply assemblies, particularly concerning the ease by which the circuit breaker may be mounted on the mounting rail and brought into electrical engagement with the supply member, are reduced or overcome in accordance with this invention, by the characterization,
(a) the contact member projects from the underside of the circuit breaker;
(b) when the circuit breaker is mounted on the mounting rail the contact member passes through the opening into the housing;
(c) means is provided to urge the contact member transversely thereof into engagement with the contact surface of the supply member; and
(d) when the circuit breaker is mounted on the mounting rail the circuit breaker extends over said opening.

Thus the circuit breaker may be mounted in position by being placed with the recess against the mounting rail and the contact member engaged with the supply member [hereinafter referred for convenience as the bus-bar], conveniently such engagement being a surface-to-surface engagement, said means conveniently being afforded by spring means.

Electrical components other than circuit breakers, including main switches, transformers, RCDs, which need the supply of electric current from the supply member, may of course be mounted on the mounting rail in the same manner as the circuit breakers, being connected to the supply member in a similar manner.

Preferably the supply member extends along side the mounting rail at a position such as to enable other electrical components, which do not need to be connected to the supply member, to be mounted on the mounting rail in the same manner as the circuit breakers, without any interference from the supply member.

In this manner the circuit breaker may derive a significant degree of stability substantially wholly from engagement with the flat surface of the mounting rail and engagement with the bus-bar.

Thus the circuit breaker need not be provided with the conventional spring clip engageable with the underside of the mounting rail, and the disadvantages thereof may be obviated.

The mounting rail may be of the conventional inverted "top hat" section, which may be secured to a conventional supporting assembly, or may be of other convenient shape. Thus the surface provided for engagement and support of the circuit breaker may be provided by spaced, parallel extending surfaces.

The circuit breaker may be removed by rectilinear movement in a direction at right angles to the plane of the surface of the mounting rail away therefrom, simultaneously withdrawing the contact member from its engagement with the bus-bar.

However if desired the circuit breaker may comprise a conventional formation, to engage beneath the mounting rail, to provide for greater stability of the circuit breaker on the mounting rail. Such a formation may be provided on the side of the circuit breaker opposite to that on which the contact member is provided, enabling the circuit breaker to be disengaged by initial rotational movement of the circuit breaker to withdraw the contact member from engagement with the bus-bar, followed by translational movement. It will be appreciated that such movement may be effected without disturbance to adjacent components which may be mounted on the rail, and without disturbance to the bus-bar itself.

Alternatively or in addition the circuit breaker comprises a formation on the same side thereof as the contact member, which is spring urged to engage-beneath the mounting rail, such formation conveniently retracting automatically on movement of the circuit breaker against the mounting rail, allowing the circuit breaker to be "clicked" in position.

Thus preferably the body of the circuit breaker is flat, parallel-sided, and when the mounting recess is positioned over and engaged with the mounting rail, a primary plane of the circuit breaker, extending parallel to the flat sides, extends at right angles to the length of the mounting rail.

Preferably the contact member projects at right angles to said primary plane and at right angles to the plane of the mounting recess provided for engagement with the mounting rail.

Preferably the contact member extends beyond said plane of the mounting recess, for engagement with the supply member. Preferably the contact member comprises a flat contact surface lying in a plane which extends at right angles to the primary plane of the circuit breaker, and which may thus engage face-to-face with the bus-bar.

Alternatively the contact member may be a separate member, conveniently L-shaped, separately mounted on the circuit breaker and located in an aperture of the circuit breaker conventionally provided for direct engagement with the bus-bar, said separate member being electrically connected to the circuit breaker by the screw means provided for electrically connecting the circuit breaker to the bus-bar.

The contact member may be substantially enclosed by an insulating sheath, comprising an exposed, terminal portion for conductive engagement with the bus-bar, and conveniently with an exposed engagement portion for connection with contact means of the circuit breaker itself.

The supply assembly may comprise an elongate, insulated housing within which the bus-bar is located, apertures being provided at spaced intervals in the housing for reception of the contact members of a plurality of such circuit breakers or other electrical equipment, to shield the bus-bar to provide for added safety, particularly where the aperture is sufficiently small to prevent finger entry, as provided for by BS 3042 - Standard Test Fingers and Probe.

Additionally the length of the terminal portion may in relation to the size of the bus-bar and the depth of the housing be such as to ensure that, as the terminal portion is withdrawn from the aperture, and becomes to be touched, it moves out of contact with the bus-bar.

Preferably the housing comprises a plurality of spring clips at spaced locations such that at least one spring clip is available to engage the contact member as it is moved towards the bus-bar. Where spaced apertures are provided for reception of the contact members, conveniently a spring clip is located in relation to each such aperture.

Preferably each spring clip is provided with an entrant portion which is open for reception of the contact member between said entrant portion and the bus-bar, to enable the spring clip to be opened in consequence of the insertion of the contact member into position.

Preferably the combination set out in the last preceding paragraph also comprises a supporting assembly comprising two end housings each comprising an engagement surface, against which the underside of a mounting rail may be engaged, and spaced arms extending from said engagement surface, at least one of said arms comprising location means to enable one of the outwardly-turned lips of the mounting rail to be engaged therein, and at least one of the arms being resilient to allow the mounting rail to be snap-fitted into position against said engagement surface and between said arms.

In this manner, by mounting a mounting rail on two such housings, one at each of the end regions of the mounting rail, and free-standing assembly may be provided, comprising a mounting rail upon which, between the end housings, circuit breakers may be mounted.

Preferably the engagement surfaces of the housings are provided with formations (such as male and/or female formations) which may be engaged with complementary formations on the underside of the mounting rail, to provide stability.

Preferably the housings are provided with means for supporting the supply assembly in parallel relationship with the mounting rail. Thus, where the supply assembly comprises an elongate housing, a bus-bar located in and extending lengthwise of the housing, one or more opening being provided in the housing to enable the contact members of the circuit breakers to be engaged with the bus-bar, and spring means to urge such contact members into engagement with the bus-bar, preferably the elongate housing is provided with supporting members to support the ends of the bus-bar, the end housings being cooperable with the supporting members whereby the bus-bar may be secured stably to, extend between, the end housing.

Preferably such cooperation is effected by the provision of snap-fitting means of the end housings, into which parts of the supporting members may be secured, although this may if desired be reversed.

Preferably the assembly set out in the last preceding paragraph comprises a supply switch, which may be mounted on the mounting rail in the same manner as has been described in relation to the circuit breakers, and which comprises a contact member for engagement with the bus-bar, the supply switch being adapted to supply electric current to the bus-bar.

There will now be given a detailed description, to be read with reference to the accompanying drawings, of preferred embodiments of this invention, which have been selected for the purposes of illustrating the invention by way of example.

In the accompanying drawings:

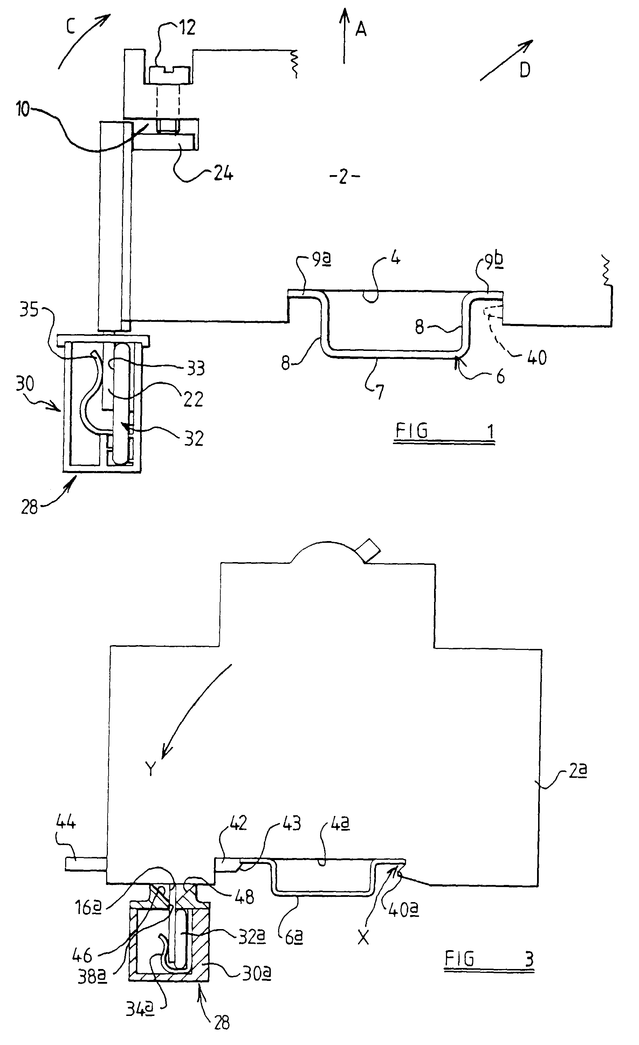

FIGURE 1 is a schematic sectional view showing a circuit breaker mounted on a mounting rail, and connected with a supply assembly, in accordance with a first embodiment of the invention;
FIGURE 2 is an exploded view of the supply assembly of the invention;
FIGURE 3 is a schematic sectional view of a second, preferred embodiment of a circuit breaker and supply assembly in accordance with the invention;
FIGURES 4a, 4b and 4c are outline views showing the circuit breaker of the second embodiment in different orientations;
FIGURE 5 is a perspective view of a supporting assembly of the second embodiment;
FIGURES 6a and 6b are end elevations of said supporting assembly, illustrating a movement into operative positions thereon of a mounting rail;
FIGURE 7 is an exploded perspective view of a supply assembly of the second embodiment; and
FIGURE 8 is a schematic view showing the mounting of the circuit breaker on the mounting rail of the second embodiment, and engaging with the supply assembly.

The circuit breaker of the first embodiment is generally conventional, comprising a housing 2 having generally flat, parallel side faces and provided on the underside thereof with a mounting recess 4, for mounting on a mounting rail 6 of conventional "top hat" section, and of the kind conventionally referred to as "din rail", the rail comprising a base 7, spaced, parallel flanges 8 extending from the base, and parallel outwardly extending flanges 9a and 9b which together provides a support surface which may be engaged by an underside of the recess 4.

In use, a plurality of circuit breakers are mounted on the mounting rail 6 with the side faces thereof in generally abutting relationship, with a primary plane of each circuit breaker, extending parallel to the flat sides thereof, extending at right angles to the length of the mounting rail.

The housing is provided on one side thereof with an aperture 11, which together with a connecting screw 12, provides means by which the circuit breaker may be secured to a conventional bus-bar, the bus-bar in use extending into the aperture 10 and being held in position by the screw 12. However in accordance with this invention the circuit breaker is provided with a contact assembly 16, comprising a generally L-shaped contact member 18 over the majority of the length of which is provided an insulating sheath or sleeve 20, leaving a residual, uninsulated terminal portion 22 and a contact portion 24, constituting the shorter limb of the assembly 16.

The contact member extends downwardly from the circuit breaker in a direction extending at right angles to the primary plane of the circuit breaker, and at right angles towards the plane of engagement between the recess 4 of the circuit breaker and the flanges 9, 9 of the mounting rail, with the terminal portion, preferably in the form of a flat blade, projecting beyond said plane of engagement.

The circuit breaker of the first embodiment for use with a supply assembly 28 comprising an elongate housing 30 within which an elongate bus-bar 32 is located, the bus-bar being provided at spaced intervals with spring clips 34, each spring clip being provided at an upper end portion thereof with an outwardly-flared entrant portion 35. The bus-bar is located within the housing, which comprises a cover 36, provided at spaced intervals, corresponding to the spacing between the spring clips 34, with apertures 38.

The bus-bar 32 is preferably provided with a flat contact face 33, extending in the longitudinal direction parallel to the length of the mounting rail 6, and at right angles to the primary planes of the circuit breakers when mounted thereon, to be engaged by the flat face of the terminal portion 22 of each contact member 18.

In the practice of the present invention, the contact assembly 16 is secured to the body of the circuit breaker 2, the contact portion 24 being located in the aperture 10 and being secured therein by means of the screw 12, with the terminal portion 22 projecting in a direction generally at right angles to the underside of the aperture 4, and beyond the plane of said underside. The circuit breaker is moved towards the mounting rail 6, with said underside engaging the support surface provided by the out-turned flanges and the terminal portion 22 passes through one of the apertures 38, engages the opening portion 35 of the spring clip 34 as it moves into contact with the bus-bar 32, the spring clip thereafter retaining the terminal portion 18 in face-to-face contact with the bus-bar.

By this means the circuit breaker may be removed from the mounting rail and supply assembly 30 by simple linear movement in the direction of the arrow A, minimising disruption of the bus-bar and other components which may be mounted on the bus-bar.

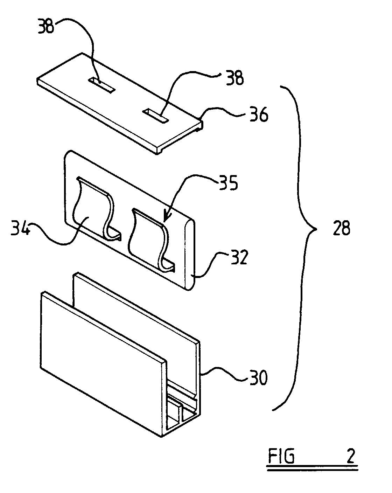

However if greater stability is required, a projection may be provided on the right hand side of the housing, as shown in dotted lines and indicated by the numeral 40 in Figure 2, which is engageable beneath the right hand flange 8, to provide greater stability. In such circumstances the circuit breaker may be removed from the mounting rail and bus-bar assembly initially by rotational motion in a clockwise direction,[as indicated by the arrow C] until the terminal portion 22 passes from the aperture 38 of the housing, subsequent to which translational movement in the general direction D may be effected to complete removal of the circuit breaker from the din-rail.

In the second embodiment, in which similar numerals increased by 100 have been used to denote parts similar to those of the first embodiment, the contact element 122 is electrically connected to the circuit breaker internally thereof, comprising a terminal portion 118 which projects from the underside of the circuit breaker.

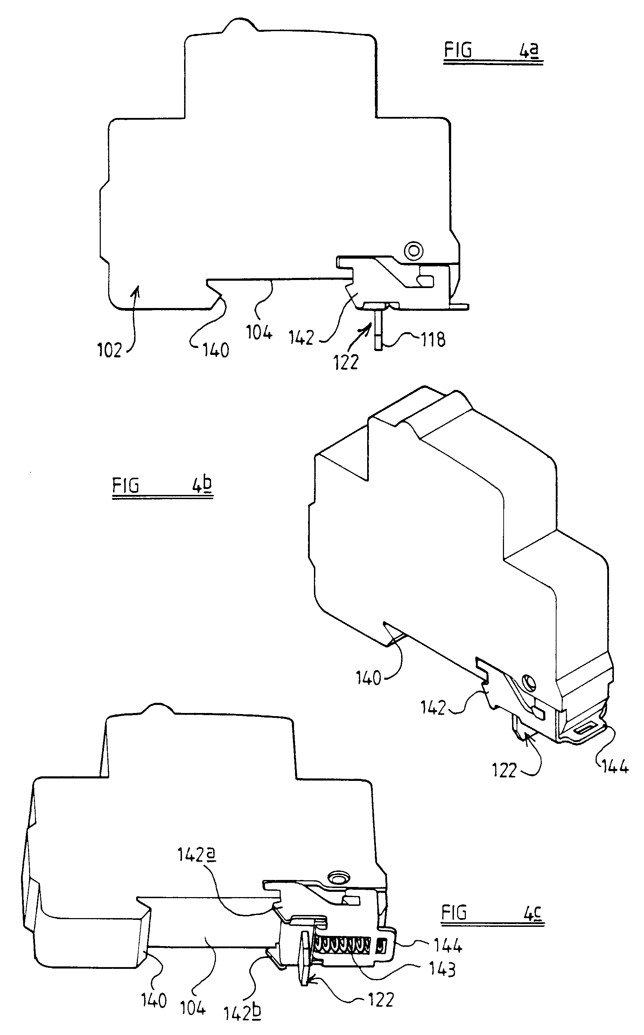

Further, in addition to having a fixed projection 140, the circuit breaker is provided with a retractable projection 142 extending into the recess 104 from the opposite side, said projection 142 being urged by a spring 143 to its advanced position, and being retractable by engagement of a tail 144, by a tool such as a screw driver. Preferably, as is shown in Figure 4c, the projection 142 is provided by spaced flanges, each having a nose portion 142a, 142b respectively, serving together as the retractable projection. In this manner, the terminal portion 122 may be arranged so as to project between said flanges 142a, 142b without contact.

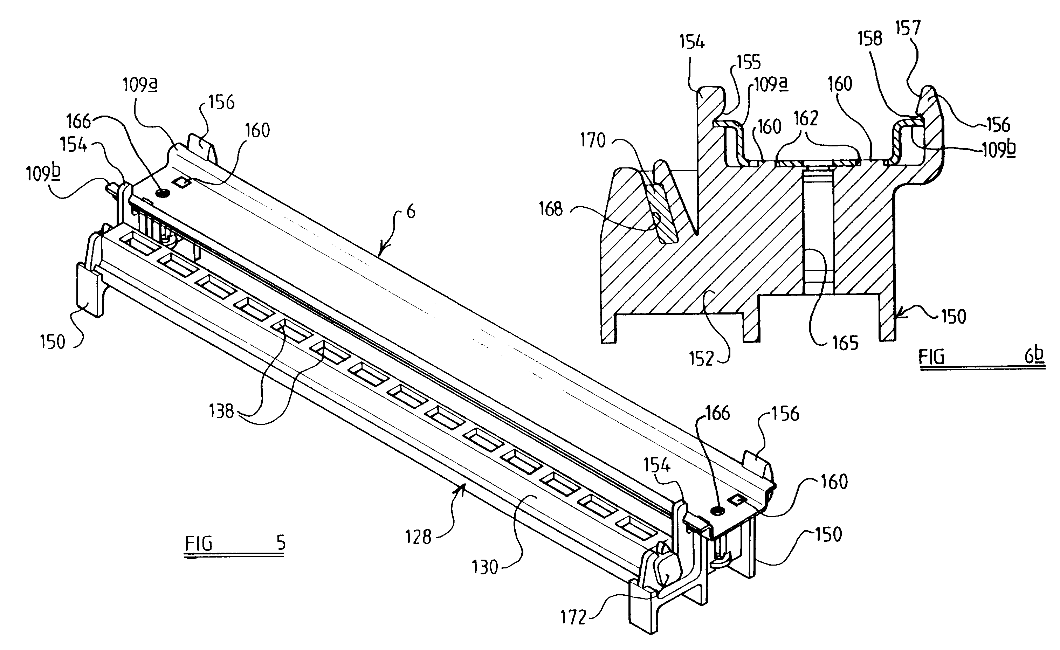

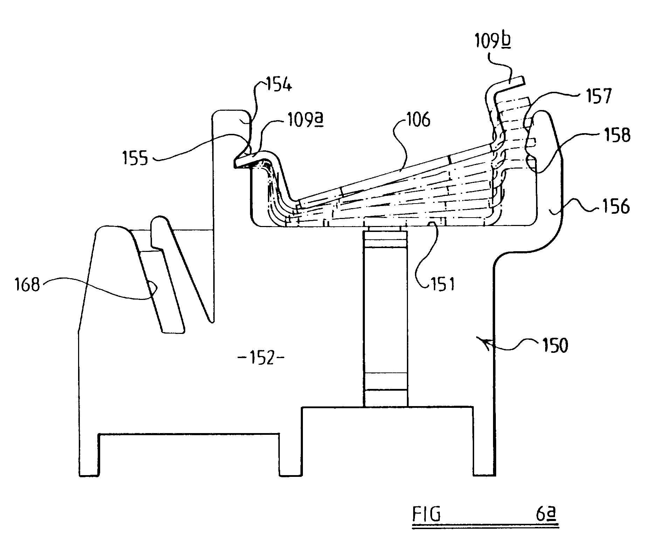

The second embodiment utilises a supporting assembly, shown in Figures 5 and 6, comprising two end housings 150, each comprising a body 152, and parallel arms 154 and 156 extending upwardly therefrom. The arm 154 is provided with a notch 155, whilst the arm 156 is provided with a cam face 157, extending to a re-entrant section 158.

One flange 109a of the mounting rail 106 may be engaged in the notch 155, and the opposite flange 109b pressed against the arm 156, engaging the cam face 157 and causing the arm 156 to flex outwardly, allowing the flange 109 to pass beneath the re-entrant face 158, with the base 107 of the flange resting against a flat upper surface 15 of the body 152.

As shown in Figure 5, extending upwardly from said flat surface of the body are projections 160, conveniently of rectangular cross-section, adapted to locate in complementary apertures 162 in the base 7 of the mounting rail.

Additionally the body 152 is provided means, conveniently in the form of an aperture 165, to enable a securing element such as a screw to be passed through a hole 166 in the mounting rail for further securement, such as to a mounting surface.

In this manner the mounting rail 106 may readily be secured in a desired position, for the reception of circuit breakers and ancillary equipment.

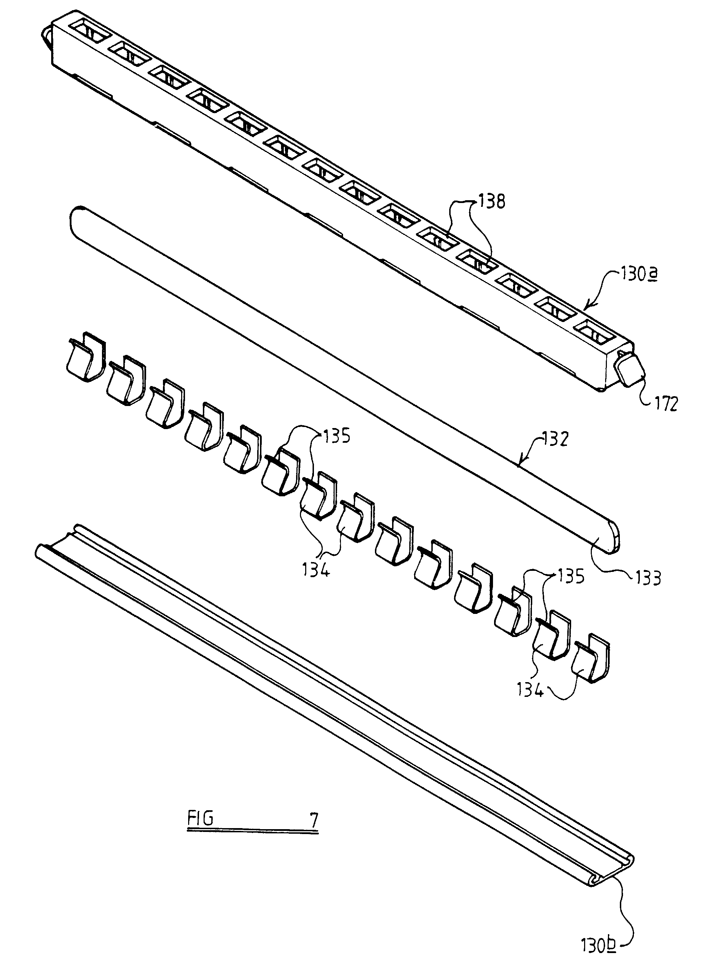

The supporting assembly also provides a support for the supply assembly 128, said supply assembly being shown in exploded form in Figure 7 and comprising an elongate housing 130 comprising an up housing part 130a, and a lower housing part 130b adapted to be snap-fitted together, an elongate supply member in the form of a bus-bar 132 located in the housing, and a plurality of spring clips 144 of generally U-shape embracing the bus-bar. The bus-bar is provided with generally parallel side faces, and each spring clip 134 is provided with an outwardly-flared terminal portion 135 for the reception of a contact element, as will be described hereinafter.

Each housing is provided with a slot 168, within which a location member 170 of an end cap 172 of the housing 130 may be engaged, firmly to secure the supply assembly to the end housing 150.

In this manner a sub-assembly comprising a mounting rail 106 and supply member 132 may be presented ready for installation, which may be accomplished simply by securing the sub-assembly by the use of screws to a supporting surface, ready for the reception of circuit breakers and ancillary equipment, including equipment to supply power to the bus-bar.

The housing 130 of the supply assembly is provided with upwardly-facing apertures 138 of a spacing equal to the width of a conventional circuit breaker, in turn being equal to the spacing of the spring clips 134 on the bus-bar 132.

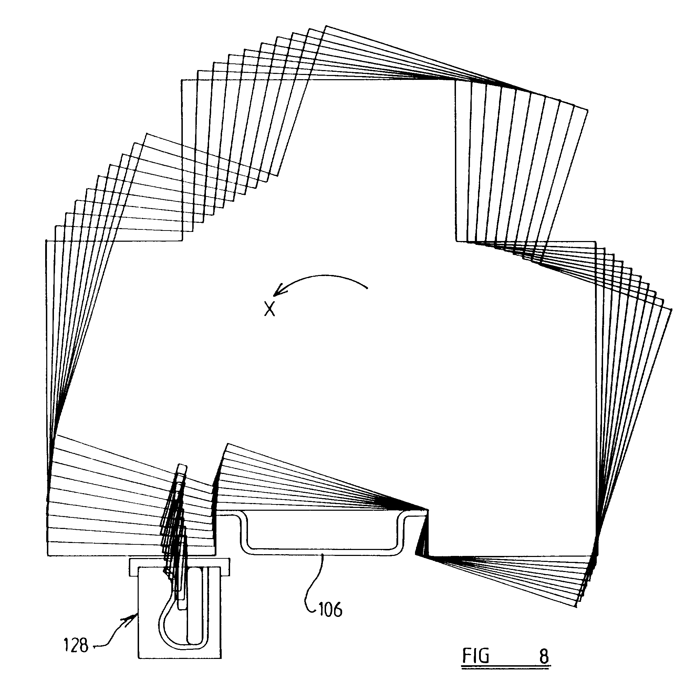

In the use of the sub-assembly, the fixed projection 140 of a circuit breaker is engaged with the flange 109b of the mounting rail, and the circuit breaker is rotated in the direction of the arrow (Figure 8) until the retractable projection 142 engages against the flange 109a, causing the projection 142 to be withdraw against the action of the spring 143 until said projection passes behind the flange 109a.

As this occurs, the contact portion 122 passes through one of the apertures 138, and engages the outwardly-flared margin 135 of an associated spring clip 134, the contact portion passing into engagement with the bus-bar 132 and being held there against by said spring clip, with the generally flat faces of the contact portion and bus-bar engaging to provide good electrical contact.

On the removal of the circuit breaker from the assembly, the tail 144 may be retracted by the use of tool such as a screw driver to allow the circuit breaker to be rotated in a direction opposite to the direction, withdrawing the contact portion 122 from the supply assembly, and this may be accomplished with no danger of inadvertently touching electrically live parts of the system.

It will be appreciated that whilst the invention has been described above in relation to the mounting of circuit breakers on mounting rails into electrical contact with a bus-bar, in general it will be desirable to use the same construction in relation to the mounting of other items of electrical equipment including main switches, transformers, RCDs, etc. Thus, where these need to be connected to the bus-bar, they will be provided with contact members similar to the contact members 22 of the circuit breakers above described, enabling them to be mounted on the mounting rail 6, and brought into contact with the bus-bar 32 as hereinbefore described.

Moreover, by virtue of the supply assembly being located to one side, and below the mounting rail 6 (as shown in Figures 2 and 3) other electrical components, which may include time switches, time clocks, transformers and the like, but which do not need to be connected to the bus-bar, may be mounted on the mounting rail 6 in a conventional manner, without any interference from the supply assembly. Such ancillary equipment may conveniently enter into engagement with the upper surface of the housing 130a, as would be the case if a conventional circuit breaker, not having a downwardly-extending contact member 22, were mounted on the mounting rail.

## Claims

1. An electricity supply assembly comprising a circuit breaker (2), a mounting rail (6) on which the circuit breaker (2) is in use, mounted, and a supply assembly (30, 130; 32, 132) for the supply of electricity to the circuit breaker (2), the mounting rail (6) having a flat mounting surface (9a, 9b) and the circuit breaker (2) comprising a mounting recess (4) in the underside thereof which in use is positioned over and engaged with said mounting surface (9a, 9b); the supply assembly (30, 130; 32, 132) comprising an elongate housing (30, 130) mounted adjacent to the mounting rail and an elongate supply member (32, 132) located in the housing, the housing being provided with an opening (38) and the supply member having a contact surface (33) extending in the longitudinal direction parallel to the length of the mounting rail (6), the circuit breaker (2) comprising a contact member (22, 122) for electrical engagement with the supply member (32,132), characterised in that
(a) said contact member (22,122) projects from the underside of the circuit breaker (2);
(b) when the circuit breaker is mounted on the mounting rail (6) the contact member (22,122) passes through the opening (38) into the housing (30,130),
(c) means (34, 134) is provided to urge the contact member transversely thereof into engagement with the contact surface (33) of the supply member (32,132); and
(d) when the circuit breaker (2) is mounted on the mounting rail the circuit breaker extends over said opening (38)

2. An electricity supply assembly according to Claim 1 wherein the mounting rail comprises a base (7), parallel upwardly-facing flanges (8), and narrow outwardly-turned lips (9a and 9b) providing said mounting surface.

3. An electricity supply assembly according to Claim 2 wherein the circuit breaker (2) comprises a formation (40, 140) on the side of the recess (4) thereof opposite to that on which the contact member (22, 122) is provided, the circuit breaker being mounted on the mounting rail by movement about an axis generally parallel to the mounting rail.

4. An electricity supply assembly according to any one of the preceding claims wherein the circuit breaker comprises a formation (42, 142) on the same side thereof as the contact member which is spring-urged to engage beneath the mounting rail.

5. An electricity supply assembly according to any one of the preceding claims wherein the circuit breaker (2) is of the kind comprising a generally flat, parallel-sided body with a primary plane of the circuit breaker extending parallel to the flat sides, also extending at right angles to the length of the mounting rail, the contact surface (33, 133) projecting at right angles to the primary plane of the circuit breaker.

6. An electricity supply assembly according to any one of the preceding claims comprising a plurality of apertures (48, 138) provided at spaced intervals in the housing for reception of the contact members (22, 122) of a plurality of such circuit breakers or other electrical equipment.

7. An electricity supply assembly according to any one of the preceding claims wherein the housing (30, 130) comprises a plurality of spring clips (134) at spaced locations such that at least one spring clip is available to engage the contact member (22, 122) as it is moved towards the supply member (32, 132).

8. An electricity supply assembly according to any one of the preceding claims also comprising a supporting assembly comprising two end housings (150) each comprising an engagement surface (151), against which a mounting rail (6, 106) may be engaged, and spaced arms (154, 156) extending from said engagement surface (151), at least one of the arms (154) comprising locations means (155) to enable one of the outwardly-turned lips (109a) of the mounting rail to be engaged therein, and at least one of the arms (156) being resilient to allow the mounting rail to be snap-fitted into position against said engagement surface (151) and between said arms (154, 156).

9. An electricity supply assembly according to Claim 8 wherein the engagement surfaces of the end housings (152) are provided with formations (160) which may be engaged with complementary formations (162) on the underside of the mounting rail.

10. An electricity supply assembly according to one of Claims 8 and 9 wherein the end housings (150) are provided with means (168) for supporting the housing (30, 130) of the supply assembly in parallel relationship with the mounting rail.

## Patentansprüche

1. Zuführungsanordnung für elektrischen Strom mit einem Schaltgerät (2), einer Befestigungsschiene (6), auf der das Schaltgerät (2) im Gebrauch angebracht ist, und einer Zuführungsanordnung (30, 130; 32, 132) für die Zuführung von elektrischern Strom an das Schaltgerät (2), wobei die Befestigungsschiene (6) eine ebene Befestigungsfläche (9a, 9b) hat und das Schaltgerät (2) an seiner Unterseite mit einer Befestigungsaussparung (4) versehen ist, die im Gebrauch über der Befestigungsfläche (9a, 9b) positioniert ist und mit dieser in Eingriff steht; wobei die Zuführungsanordnung (30, 130; 32, 132) ein längliches Gehäuse (30, 130) umfaßt, welches benachbart zur Befestigungsschiene angebracht ist und wobei sich ein längliches Zuführungsteil (32, 132) in dem Gehäuse befindet, wobei das Gehäuse mit einer Öffnung (38) versehen ist und das Zuführungsteil eine Kontaktfläche (33) aufweist, die sich in Längsrichtung parallel zur Länge der Befestigungsschiene (6) erstreckt, und wobei das Schaltgerät (2) ein Kontaktteil (22, 122) zum elektrischen Zusammenwirken mit dem Zuführungsteil (32, 132) aufweist, dadurch gekennzeichnet, daß
(a) das Kontaktteil (22, 122) von der Unterseite des Schaltgeräts (2) vorsteht;
(b) wenn das Schaltgerät auf der Befestigungsschiene (6) gehalten ist, das Kontaktteil (22, 122) durch die Öffnung (38) in das Gehäuse (30, 130) hineingeht;
(c) eine Einrichtung (34, 134) vorbanden ist, um das Kontaktteil quer zu diesem in Zusammenwirken mit der Kontaktfläche (33) des Zuführungsteils (32, 132) zu drücken; und
(d) wenn das Schaltgerät (2) auf der Befestigungsschiene angebracht ist, das Schaltgerät sich über die Öffnung (38) erstreckt.

2. Zuführungsanordnung für elektrischen Strom nach Anspruch 1, dadurch gekennzeichnet, daß die Befestigungsschiene ein Sockelteil (7), parallele, nach oben weisende Flansche (8) sowie schmale, nach außen gekehrte Ränder (9a und 9b) aufweist, die die genannte Befestigungsfläche bilden.

3. Zuführungsanordnung für elektrischen Strom nach Anspruch 2, dadurch gekennzeichnet, daß das Schaltgerät (2) eine Ausformung (40, 140) auf der Seite von dessen Aussparung (4) aufweist, gegenüber der Seite, auf der sich das Kontaktteil (22, 122) befindet, wobei das Schaltgerät auf der Befestigungsschiene durch Bewegung um eine im wesentlichen zur Befestigungsschiene parallele Achse angebracht wird.

4. Zuführungsanordnung für elektrischen Strom nach einem der vorangehenden Ansprüche, dadurch gekenneichnet, daß das Schaltgerät eine Ausformung (42, 142) auf der gleichen Seite wie das Kontaktteil aufweist, die federbelastet ist, um unter der Befestigungsschiene einzugreifen.

5. Zuführungsanordnung für elektrischen Strom nach einem der vorangehenden Ansprüche, dadurch gekennzeichnet, daß das Schaltgerät (2) von der Art ist, die einen im wesentlichen ebenen, parallele Seiten aufweisenden Körper umfaßt, wobei sich eine Hauptebene des Schaltgeräts parallel zu den ebenen Seiten erstreckt und rechtwinklig zur Länge der Befestigungsschiene verläuft, wobei die Kontaktfläche (33, 133) rechtwinklig zur Hauptebene des Schaltgeräts vorsteht.

6. Zuführungsanordnung für elektrischen Strom, nach einem der vorangehenden Ansprüche, dadurch gekennzeichnet, daß eine Anzahl von Öffnungen (48, 138) in beabstandeten Intervallen in dem Gehäuse angeordnet sind, um die Kontaktteile (22, 122) einer Anzahl von derartigen Schaltgeräten oder anderen elektrischen Bauteilen aufzunehmen.

7. Zuführungsanordnung für elektrischen Strom nach einem der vorangehenden Ansprüche, dadurch gekennzeichnet, daß das Gehäuse (30, 130) eine Anzahl von Federklammern (134) an beabstandeten Stellen umfaßt, so daß zumindest eine Federklammer verfügbar ist, um das Kontaktteil (22, 122) zu erfassen, wenn es in Richtung auf das Zuführungsteil (32, 132) bewegt wird.

8. Zuführungsanordnung für elektrischen Strom nach einem der vorangehenden Ansprüche, gekennzeichnet durch eine Abstützanordnung mit zwei Endgehäusen (150), die jeweils eine Eingriffsfläche (151) aufweisen, gegen die eine Befestigungsschiene (6, 106) in Eingriff gebracht werden kann, wobei sich beabstandete Arme (154, 156) von der Eingriffsfläche (151) erstrecken und zumindest einer der Arme (154) ein Aufnahmemittel (155) aufweist, um einen der nach außen gekehrten Ränder (109a) der Befestigungsschiene damit in Eingriff zu bringen, wobei zumindest einer der Arme (156) nachgiebig ist, damit die Befestigungsschiene in ihre Stellung, in der sie gegen die Eingriffsfläche (151) und zwischen den Armen (154, 156) liegt, eingerastet werden kann.

9. Zuführungsanordnung für elektrischen Strom nach Anspruch 8, dadurch gekennzeichnet, daß die Eingriffsflächen der Endgehäuse (152) mit Ausformungen (170) versehen sind, die mit komplementären Ausformungen (162) auf der Unterseite der Befestigungsschiene in Eingriff gebracht werden können.

10. Zuführungsanordnung für elektrischen Strom nach einem der Ansprüche 8 oder 9, dadurch gekennzeichnet, daß die Endgehäuse (150) mit einem Mittel (168) zum Abstützen des Gehäuses (30, 130) der Zuführungsanordnung in paralleler Beziehung zur Befestigungsschiene versehen sind.

## Revendications

1. Ensemble d'alimentation électrique comprenant un coupe-circuit (2), un rail (6) de montage sur lequel est monté le coupe-circuit (2) lors de l'utilisation, et un ensemble (30, 130 ; 32, 132) d'alimentation pour l'alimentation en électricité du coupe-circuit (2), le rail (6) de montage ayant une surface (9a, 9b) de montage plane et le coupe-circuit (2) comprenant un évidement (4) de montage dans sa face inférieure qui, lors de son utilisation, est positionné au-dessus et engagé sur ladite surface (9a, 9b) de montage ; l'ensemble (30, 130 ; 32, 132) d'alimentation comprenant un boîtier (30, 130) oblong monté de façon adjacente au rail de montage et un élément (32, 132) d'alimentation oblong placé dans le boîtier, le boîtier étant muni d'une ouverture (38) et l'élément d'alimentation ayant une surface (33) de contact s'étendant dans la direction longitudinale parallèlement à la longueur du rail (6) de montage, le coupe-circuit (2) comprenant un élément (22, 122) de contact pour un engagement électrique sur l'élément (32, 132) d'alimentation, caractérisé en ce que
(a) ledit élément (22, 122) de contact fait saillie depuis la face inférieure du coupe-circuit (2) ;
(b) lorsque le coupe-circuit est monté sur le rail (6) de montage, l'élément (22, 122) de contact passe à travers l'ouverture (38) à l'intérieur du boîtier (30, 130),
(c) des moyens (34, 134) sont prévus pour solliciter l'élément de contact transversalement par rapport à celui-ci pour le faire s'engager sur la surface (33) de contact de l'élément (32, 132) d'alimentation ; et
(d) lorsque le coupe-circuit (2) est monté sur le rail de montage, le coupe-circuit s'étend au-dessus de ladite ouverture (38).

2. Ensemble d'alimentation électrique selon la revendication 1, dans lequel le rail de montage comprend une base (7), des brides (B) parallèles tournées vers le haut, et des lèvres (9a et 9b) étroites tournées vers l'extérieur constituant ladite surface de montage.

3. Ensemble d'alimentation électrique selon la revendication 2, dans lequel le coupe-circuit (2) comprend une formation (40, 140) sur le côté de son évidement (4) qui est opposé à celui sur lequel est disposé l'élément (22, 122) de contact, le coupe-circuit étant monté sur le rail de montage par mouvement autour d'un axe globalement parallèle au rail de montage.

4. Ensemble d'alimentation électrique selon l'une quelconque des revendications précédentes, dans lequel le coupe-circuit comprend une formation (42, 142) du même côté de celui-ci que l'élément de contact qui est sollicité par ressort pour s'engager sous le rail de montage.

5. Ensemble d'alimentation électrique selon l'une quelconque des revendications précédentes, dans lequel le coupe-circuit (2) est du type comprenant un corps globalement plat à côtés parallèles ayant un plan principal du coupe-circuit s'étendant parallèlement aux côtés plans, s'étendant également à angle droit par rapport à la longueur du rail de montage, la surface (33, 133) de contact faisant saillie à angle droit par rapport au plan principal du coupe-circuit.

6. Ensemble d'alimentation électrique selon l'une quelconque ' des revendications précédentes, comprenant une pluralité d'orifices (48, 138) disposés à des intervalles espacés dans le boîtier pour recevoir les éléments (22, 122) de qontact d'une pluralité de ces coupe-circuit ou d'autres appareillages électriques.

7. Ensemble d'alimentation électrique selon l'une quelconque des revendications précédentes, dans lequel le boîtier (30, 130) comprend une pluralité de pinces (134) à ressorts à des emplacements espacés de telle façon qu'au moins une pince à ressort soit disponible pour s'engager sur l'élément (22, 122) de contact lorsqu'il est déplacé vers l'élément (32, 132) d'alimentation.

8. Ensemble d'alimentation électrique selon l'une quelconque des revendications précédentes, comprenant également un ensemble de support comprenant deux boîtiers (150) d'extrémité comprenant chacun une surface (151) d'engagement contre laquelle peut s'engager un rail (6, 106) de montage, et des bras (154, 156) espacés partant de ladite surface (151) d'engagement, au moins l'un des bras (154) comprenant des moyens (155) de positionnement pour permettre à l'une des lèvres (109a) tournées vers l'extérieur du rail de montage de s'engager dans ceux-ci, et au moins l'un des bras (156) étant élastique pour permettre au rail de montage d'être mis en position par encliquetage contre ladite surface (151) d'engagement et entre lesdits bras (154, 156).

9. Ensemble d'alimentation électrique selon la revendication 8, dans lequel les surfaces d'engagement des boîtiers (152) d'extrémité sont munies de formations (160) qui peuvent s'engager sur des formations (162) complémentaires se trouvant sur la face inférieure du rail de montage.

10. Ensemble d'alimentation électrique selon l'une des revendications 8 et 9, dans lequel les boîtiers d'extrémité (150) sont munis de moyens (168) pour supporter le boîtier (30, 130) de l'ensemble d'alimentation selon une relation parallèle au rail de montage. .
